# EUROPEAN PATENT APPLICATION

(11) **EP 1 601 079 A2**
(43) Date of publication of application: **30.11.2005**
(21) Application number: 05076196.4
(22) Date of filing: 24.05.2005
(51) Int. Cl.: H02J 7/34

(54) **Dual-mode bus discharging circuit**

(30) Priority: 26.05.2004 US 853883
(71) Applicant: Delphi Technologies, Inc., Troy, MI 48007 (US)
(72) Inventor: Choi, Hyun-Sung, Lake Zurich, IL 60047 (US); Tackitt, Douglas J., Kokomo, IN 46902 (US)
(74) Representative: Denton, Michael John

(57) **Abstract**

A technique for discharging an energy storage device coupled to a power bus provides a first discharge path for the energy storage device (C_{BUS}), when the power bus is connected to a battery (V_{BATT}), and a second discharge path for the energy storage device (C_{BUS}), when the power bus is disconnected from the battery (V_{BATT}). The first discharge path has a higher impedance value than the second discharge path.

## Description

### Technical Field

The present invention is generally directed to a bus discharging circuit and, more specifically, to a dual-mode bus discharging circuit.

### Background of the Invention

In general, automotive power systems with advanced alternator technology, e.g., 42 Volt automotive power systems, have required one or more input capacitors between an automotive battery and an inverter power stage to satisfy ripple current requirements. Unfortunately, when a service disconnect occurs at the battery, e.g., during servicing of an associated motor vehicle, the energy stored in the input capacitors has remained as a potential source for arcing, which may damage various electronic components of the motor vehicle. When the automotive power system implements higher voltages, e.g., a 42 Volt power system, and the 42 Volt battery is disconnected for service of the electrical system of the motor vehicle, the probability of arcing is increased.

Traditionally, in motor vehicles including 42 Volt power systems, a bleed resistor has been placed across the 42 Volt power bus to discharge the power bus when the battery is disconnected from the power bus to address the arcing problem. At a service disconnect, the energy stored in the input capacitors is discharged through the bleed resistor with a time constant determined by the value of the capacitance of the input capacitor(s) and the resistance of the bleed resistor. As a general rule, the resistance of the bleed resistor is required to be relatively high, e.g., several MOhm, to meet power bus leakage current requirements. Unfortunately, when a bleed resistor is implemented that satisfies bus leakage current requirements, the time period for discharging the power bus, when a battery disconnect occurs, is relatively high and, as such, the time period required for discharging the power bus to a safe level is relatively long.

What is needed is a bus discharging circuit that reduces the voltage level on a power bus in a relatively short time period, while meeting bus leakage current requirements.

### Summary of the Invention

The present invention is directed to a system and method for discharging an energy storage device coupled to a power bus. The system and method provide a first discharge path for an energy storage device that is coupled to a power bus when the power bus is connected to a battery. The system and method provide a second discharge path for the energy storage device when the power bus is disconnected from the battery. The first discharge path has a higher impedance value than the second discharge path.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is a block diagram of an exemplary power system constructed according to the prior art;
Fig. 2 is a block diagram of an exemplary power system constructed according to the present invention;
Fig. 3 is an exemplary electrical schematic of a dual-mode bus discharging circuit constructed according to the present invention; and
Fig. 4 is a graph depicting exemplary signals at various points in the circuit of Fig. 3 during operation.

### Description of the Preferred Embodiments

The present invention is directed to a system and method for discharging an energy storage device coupled to a power bus. During electrical service of a motor vehicle, it is common for a battery of the motor vehicle to be disconnected. As is discussed above, in 42 Volt power systems with advanced alternator technology, input capacitors have been used between a 42 Volt battery (or bank of batteries) and an inverter power stage to meet ripple current requirements. As is also discussed above, when a service disconnect occurs, the energy stored in the capacitors remain as a potential source for arcing, which can damage various electronic subsystems of the motor vehicle. As such, according to the present invention, a system and method for discharging an energy storage device, e.g., a capacitor, coupled to a power bus provides a first higher impedance discharge path for the energy storage device when the power bus is connected to the battery and a second lower impedance discharge path when the power bus is disconnected from the battery. By providing a second discharge path that has a lower impedance than the first discharge path, the power bus can be discharged within a relatively short period of time to a safe level to prevent damage to the various electronic subassemblies of the motor vehicle, when the power bus is disconnected from the battery.

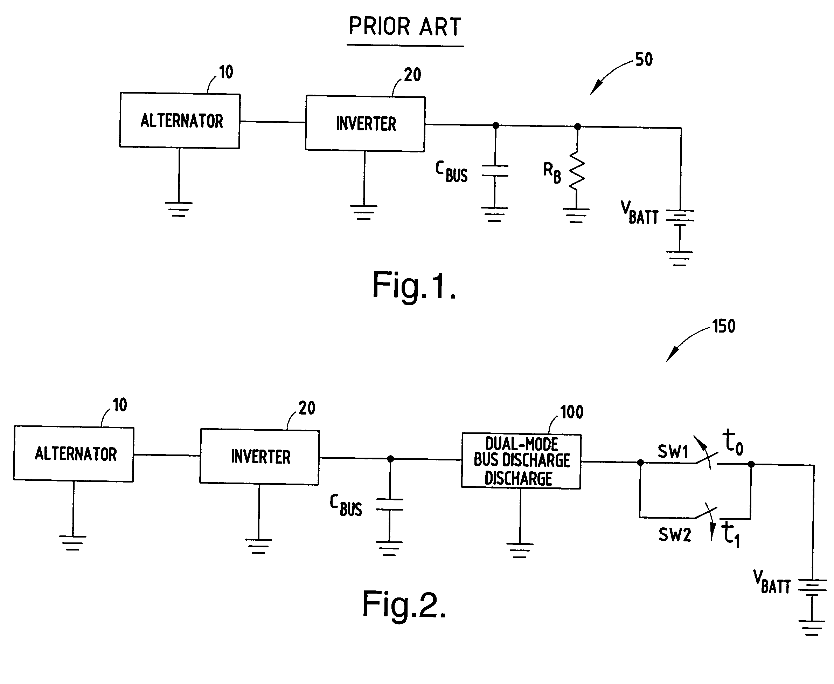

With reference to Fig. 1, a power system 50, including an alternator 10 that is coupled to an inverter 20, provides a recharging current to a battery V_{BATT}, e.g., a 42 Volt battery or battery bank. As is discussed above, a capacitor C_{BUS} is utilized to reduce ripple at the inverter 20 and a bleed resistor R_{B} is utilized to discharge the capacitor C_{BUS} when the battery V_{BATT} is disconnected from the inverter 20.

Turning to Fig. 2, a power system 150, including an alternator 10, an inverter 20, a dual-mode bus discharging circuit 100 and a battery V_{BATT}, is depicted. A pair of switches SW1 and SW2 are implemented to simulate removal (at t₀)/reconnection (at t₁), respectively, of the battery V_{BATT} from/to the dual-mode bus discharging circuit 100.

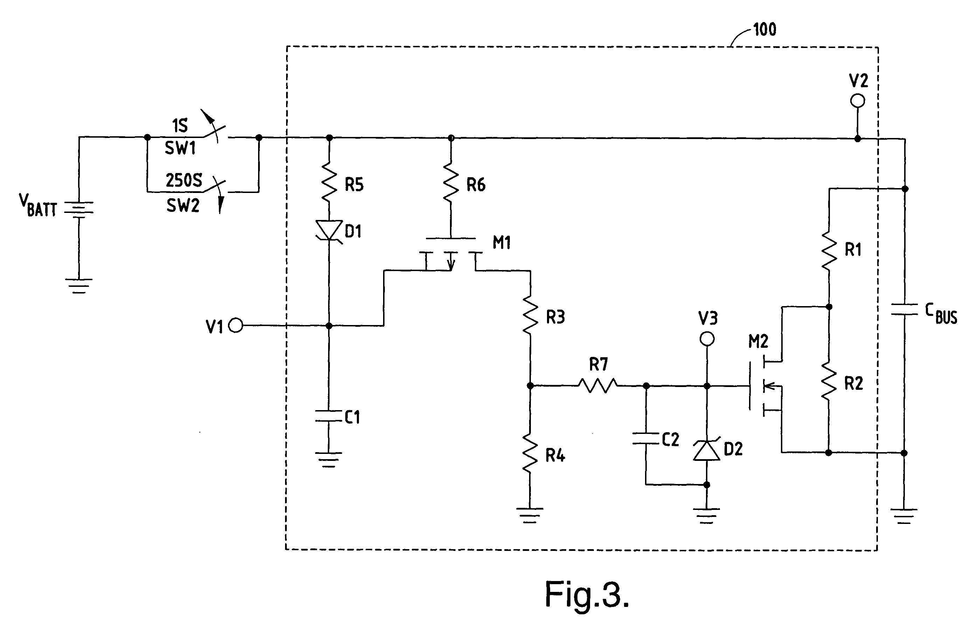

With reference to Fig. 3, exemplary components of the dual-mode bus discharging circuit 100 are shown in further detail. As is shown in Fig. 3, the battery V_{BATT} is connected to an input capacitor C_{BUS} during normal operation. Resistors R1 and R2, which act as bleed resistors, are coupled in parallel with the capacitor C_{BUS}. The bleed resistors R1 and R2 may be selected to draw around one milliampere leakage current from a 42 Volt battery, depending upon the maximum leakage current allowed. Under normal operating conditions, i.e., when the battery V_{BATT} is connected, the circuit 100 acts essentially the same as a bleed resistor of the prior art.

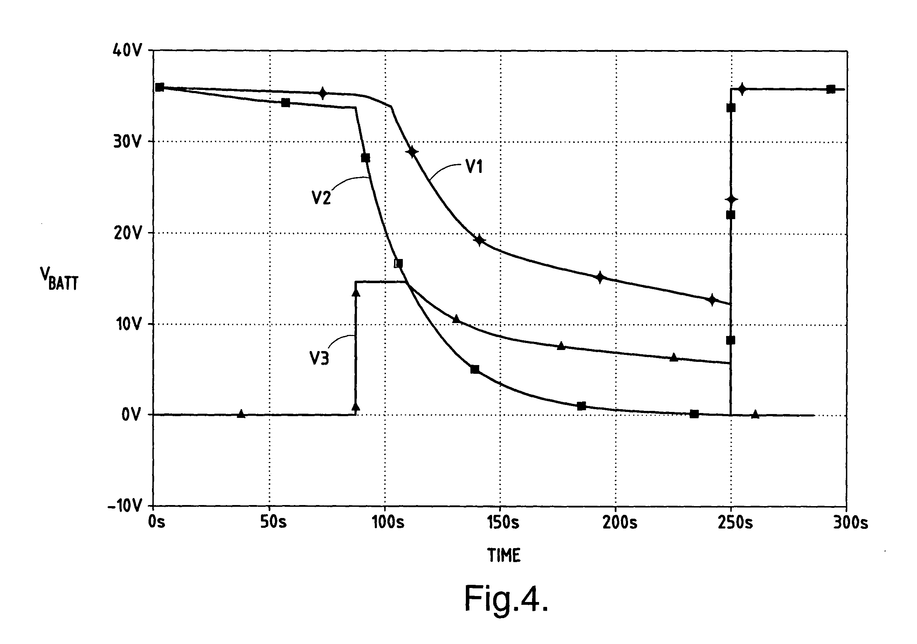

When the battery V_{BATT} is disconnected from the bus (e.g., by opening switch SW1 at T=1S), the capacitor C_{BUS} begins to discharge through resistors R1 and R2 (see Fig. 4, curve V2). A capacitor C1, at the time the battery V_{BATT} is disconnected from the power bus, is also charged to the battery V_{BATT} voltage level and remains fully charged when the resistors R1 and R2 are in the slow discharge mode, as a body diode (not shown) of transistor M1 (e.g., a P-channel FET) and a zener diode D 1 prevent current flow (see Fig. 4, curve V1). When the capacitor C_{BUS} is discharged to the point that the voltage differential between a gate and a source of the transistor M1, i.e., the voltage difference between the capacitor C 1 and the capacitor C_{BUS}, is large enough, the transistor M1 conducts and provides a voltage at a gate of transistor M2 (e.g., an N-channel FET), which causes the transistor M2 to conduct (see Fig. 4, curve V3).

When the transistor M2 is turned on, the resistor R2 is essentially shorted and the primary discharge path is through the resistor R1 and the transistor M2. As the "on-resistance" of the transistor M2 is generally much smaller than the value of the resistor R1, the resistor R1 essentially determines the fast discharging time. It should be appreciated that it is desirable to select the values for resistors R3 and R4 to set a time constant (determined by the capacitor C 1 and the resistors R3 and R4) that is larger than the time constant set by the capacitor C_{BUS} and the resistor R1 to ensure that the transistor M1 is held on for the entire discharge period.

In various situations, it may be desirable to select the transistors M1 and M2 to be logic level field-effect transistors (FETs), as a faster response time is desired with the same amount of resistance under a slow discharging mode. In certain situations, it is desirable to provide zener diodes D1 and D2 to protect the transistors M1 and M2, respectively, to prevent their gate to source voltages from exceeding their rated values. For example, the zener diodes D 1 and D2 may be selected in a range of 15 to 20 volts. As referenced above, Fig. 4 depicts a graph of exemplary voltage curves V1, V2 and V3 associated with the circuit of Fig. 3, when the battery V_{BATT} has a voltage of 36 Volts. As is depicted in Figs. 3 and 4, the switch SW1 opens at 'T' equal to IS and the switch SW2 closes at 'T' equal to 250S.

Accordingly, a dual-mode bus discharging circuit has been described herein that advantageously provides an economical bus discharging circuit that reduces a voltage level on a power bus in a relatively short time period, while meeting bus leakage current requirements, for motor vehicles that utilize a 42 Volt power system. It should be appreciated that the dual-mode bus discharging circuit may also be implemented in a variety of power systems of differing voltages, where arcing after a service disconnect are of concern.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A method for discharging an energy storage device coupled to a power bus, comprising the steps of:
providing a first discharge path for an energy storage device (C_{BUS}) that is coupled to a power bus when the power bus is connected to a battery (V_{BATT}); and
providing a second discharge path for the energy storage device (C_{BUS}) when the power bus is disconnected from the battery (V_{BATT}), wherein the first discharge path has a higher impedance than the second discharge path.

2. The method of claim 1, wherein the energy storage device (C_{BUS}) is a capacitor.

3. The method of claim 1, wherein the first discharge path is a resistive path.

4. The method of claim 1, wherein the second discharge path is a resistive path.

5. The method of claim 1, wherein the first and second discharge paths are resistive paths

6. An automotive power system (150), comprising:
an alternator (10);
an inverter (20) coupled to the alternator (10);
a dual-mode bus discharging circuit (100) coupled to the inverter (20) by a power bus;
an energy storage device (C_{BUS}) coupled to the power bus; and
a battery (V_{BATT}) coupled to the dual-mode bus discharging circuit (100), wherein the dual-mode bus discharging circuit (100) provides a first discharge path for the energy storage device (C_{BUS}) when the power bus is connected to the battery (V_{BATT}) and a second discharge path for the energy storage device (C_{BUS}) when the power bus is disconnected from the battery (V_{BATT}), and wherein the first discharge path has a higher impedance that the second discharge path.

7. The system (150) of claim 6, wherein the energy storage device (C_{BUS}) is a capacitor.

8. The system (150) of claim 6, wherein the first discharge path is provided by a pair of serially coupled resistors (R1,R2) that are coupled in parallel with the energy storage device (C_{BUS}).

9. The system (150) of claim 8, wherein the second discharge path is provided by a first one of the pair of serially coupled resistors (R1) and a conducting N-channel field-effect transistor (FET) (M2), and wherein a drain and source of the FET (M2) are coupled to opposite sides of a second one of the pair of serially coupled resistors (R2).

10. The system (150) of claim 9, wherein the dual-mode bus discharging circuit (100) includes a P-channel FET (M1) whose control terminal is coupled to the energy storage device (C_{BUS}) and whose source is coupled to a battery voltage holding capacitor (C1), and wherein a drain of the P-channel FET (M1) is coupled to a gate of the N-channel FET (M2).

11. The system (150) of claim 10, wherein the dual-mode bus discharging circuit (100) further comprises:
a first voltage protection device (D2) coupled between the gate and source of the N-channel FET (M2); and
a second voltage protection device (D1) coupled between the gate and source of the P-channel FET (M1).

12. An automotive power system (150), comprising:
an alternator (10);
an inverter (20) coupled to the alternator (10);
a dual-mode bus discharging circuit (100) coupled to the inverter (20) by a power bus;
an energy storage device (C_{BUS}) coupled to the power bus; and
a 42 Volt battery (V_{BATT}) coupled to the dual-mode bus discharging circuit (100), wherein the dual-mode bus discharging circuit (100) provides a first discharge path for the energy storage device (C_{BUS}) when the power bus is connected to the battery (V_{BATT}) and a second discharge path for the energy storage device (C_{BUS}) when the power bus is disconnected from the battery (V_{BATT}), and wherein the first discharge path has a higher impedance that the second discharge path.

13. The system (150) of claim 12, wherein the energy storage device (C_{BUS}) includes one or more capacitors.

14. The system (150) of claim 13, wherein the first discharge path is provided by a pair of serially coupled resistors (R1,R2) that are coupled in parallel with the energy storage device (C_{BUS}).

15. The system (150) of claim 14, wherein the second discharge path is provided by a first one of the pair of serially coupled resistors (R1) and a conducting N-channel field-effect transistor (FET) (M2), and wherein a drain and source of the FET (M2) are coupled to opposite sides of a second one of the pair of serially coupled resistors (R2).

16. The system (150) of claim 15, wherein the dual-mode bus discharging circuit (100) includes a P-channel FET (M1) whose control terminal is coupled to the energy storage device (C_{BUS}) and whose source is coupled to a battery voltage holding capacitor (C1), and wherein a drain of the P-channel FET (M1) is coupled to a gate of the N-channel FET (M2).

17. The system (150) of claim 16, wherein the dual-mode bus discharging circuit (100) further comprises:
a first voltage protection device (D2) coupled between the gate and source of the N-channel FET (M2); and
a second voltage protection device (D1) coupled between the gate and source of the P-channel FET (M1).

18. The system (150) of claim 17, wherein the first and second voltage protection devices (D2,D1) are zener diodes.
